# EUROPEAN PATENT APPLICATION

(11) **EP 0 708 392 A1**
(43) Date of publication of application: **24.04.1996**
(21) Application number: 95116512.5
(22) Date of filing: 19.10.1995
(51) Int. Cl.: G05B 19/409

(54) **Operational guidance system for measuring machine**

(30) Priority: 21.10.1994 JP 282892/94
(71) Applicant: TOKYO SEIMITSU CO.,LTD., Mitaka-shi Tokyo (JP)
(72) Inventor: Yoshida, Hitoshi, Mitaka-shi, Tokyo (JP)
(74) Representative: Hering, Hartmut, Dipl.-Ing.

(57) **Abstract**

According to the present invention there is provided an operational guidance system for a measuring machine comprising input means (11a, 11b), display means (16), first storage means (12) for storing a plurality of previously made programs for a measuring procedure, second storage means (14) for storing plural pieces of previously made operational guidance, calculating means (13) and instructing means (15). Operational procedures for a measuring machine are previously photographed and digitized to be memorized. When an operator selects a program for a measuring procedure of the measuring machine, an image and sound indicating the selected procedure in accordance with the program. When trouble occurs during the measurement, the image and sound indicating a method of dealing with the trouble are automatically displayed. Furthermore, when the operator gives an instruction, the image and sound indicating a maintenance and examination procedure are displayed.

## Description

The present invention relates to operational guidance system for measuring machine, more particularly to operational guidance system for measuring machine such as 3-D coordinate measuring machine, surface roughness measuring machine, contour measuring machine, roundness measuring machine, layout machine, profile projector, non-contact 2-D measuring machine, measuring machine for a gear, and the like.

There is a lot of kind of measuring machine, for example, 3-D Coordinate measuring machine, surface roughness measuring machine, contour measuring machine, roundness measuring machine, layout machine, profile projector, non-contact 2-D measuring machine, measuring machine for a gear, and the like.

Further, in view of an operation, the measuring machine is classified into the measuring machine operated manually (manual type), the measuring machine operated remotely from a operating means such as a joystick (remote type), and the automatic measuring machine controlled by a computer (automatic type) and the like.

For each of the manual type, the remote type, and the automatic type, it is required to know a position of an object to be measured, and to decide a measuring coordinate system (for example, a spatial coordinate system consisting of three reference axes X, Y and Z which are perpendicular to the origin in the case of the 3-D coordinate measuring machine) before measuring the object (hereinafter refer to "Reference measurement"). The way of this reference measurement differs according to the object.

Usually, a method of how to deal the measuring machine, how to perform the reference measurement, how to treat with troubles during an operation, and how to maintain and examine the machine, etc. are described in a manual book attached to the measuring machine. Accordingly, an operator learns how to operate the measuring machine from the manual book.

The measuring operations and the way of the above-mentioned reference measurement differ according to the object, so if the operators are changed, a new operator may not understand how to operate. As a result, the operator has to make a handbook, etc. by himself for easy operation.

However, it takes much time for the inexperienced person to understand the handbook, and many hours are required for carrying out the reference measurement and the measurement.

Likewise, it takes much time to maintain and examine the measuring machine.

Therefore, these are problems in the operation which should be performed every day.

Moreover, there is a problem in that it takes much time to understand the manual book so that the operator could not deal with the troubles quickly and appropriately.

The present invention has been developed in view of the above-described circumstances, and has as its aim the provision of the operational guidance system for measuring machine enable an operator, in particular an inexperienced operator to easily understand how to perform the measurement and the reference measurement, how to deal with troubles, and how to maintain and examine the measuring machine.

To achieve the above-described objects, an operational guidance system for a measuring machine mainly comprises input means, display means, first storage means, second storage means, calculating means, and instructing means. A plurality of programs for a measuring procedure of the measuring machine is stored in the first storage means. The programs are made previously and an operator selects a desired program among the plurality of programs in accordance with the measuring machine at the input part. The second storage means stores plural pieces of operational guidance which is made previously. The calculating means calculates a measuring value from data measured by the measuring machine and the measuring value is transmitted to the display means so as to be displayed. The instructing means reads out the operational guidance from the second storage means in accordance with the program selected by the operator, an instruction by the operator from the input means, or a signal indicating a trouble from the measuring machine. The operational guidance is transmitted to the display means so as to be displayed.

The preferred embodiment of the operational guidance system for a measuring machine further comprises operating means and control means for the measuring machine. The measuring machine is remotely operated from the operating means. The operating means is included in the input means. The control means controls the measuring machine in accordance with an instruction from the operating means.

Moreover, the operational guidance system according to the present invention further comprising control means. A program for automatically operating the measurement machine is included in the programs for a measuring procedure of the measuring machine. The control means controls the measuring machine in accordance with the program for automatically operating.

According to the operational guidance system for measuring machine of the present invention, each operation method is photographed and digitized to be memorized. When the operator instructs the program for a measuring procedure from the input part at the time of measuring, the image and sound explaining the operation are reproduced in accordance with the order set by the selected program. When the trouble occurs during the operation, the image and sound indicating a method of dealing with the trouble are reproduced. Furthermore, when the operator instructs the item for the maintenance/examination from the input part, the image and sound indicating the operation are reproduced.

Further, the operational guidance system for measuring machine of the present invention can be used for the measuring machine such as 3-D coordinate measuring machine, surface roughness measuring machine, contour measuring machine, roundness measuring machine, layout machine, profile projector, non-contact 2-D measuring machine, measuring machine for a gear, and the like, by preparing a program for a measuring procedure of each of the above-mentioned measuring machines.

### BRIEF DESCRIPTION OF THE DRAWINGS

The exact nature of this invention, as well as other objects and advantages thereof, will be readily apparent from consideration of the following specification relating to the accompanying drawings, in which like reference characters designate the same or similar parts throughout the figures and wherein:
Fig. 1 is a block diagram of the first embodiment of an operational guidance system for measuring machine according to the present invention;
Fig. 2 is a block diagram of the second embodiment of the operational guidance system for measuring machine according to the present invention;
Fig. 3 is a block diagram of the third embodiment of the operational guidance system for measuring machine according to the present invention;
Fig. 4 is an example of an example of an operational guidance displayed in the operational guidance system for measuring machine according to the present invention; and
Fig. 5 is a view explaining how to carry out the reference measurement.

Detailed description will hereunder be given of the preferred embodiment of a coordinate measuring system with an operation guidance according to the present invention with reference to the accompanying drawings.

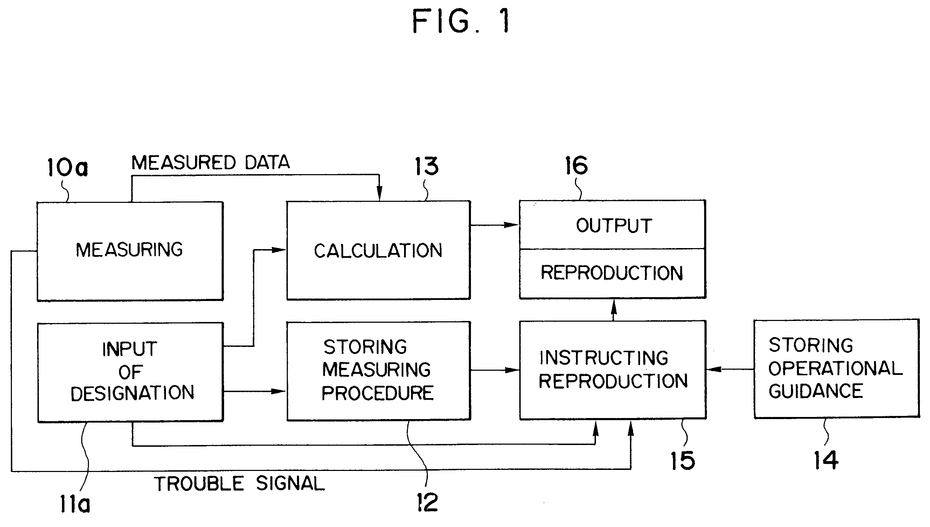

Fig. 1 is a block diagram of a first embodiment of the operational guidance system for measuring system according to the present invention. As shown in Fig. 1, the system comprises a measuring machine 10a, an input part 11a, a program storage part 12, a measuring data calculating part 13, a guidance storage part 14, a reproduction instructing part 15 and an output part 16. In the first embodiment, a measuring machine 10a is manually operated. In the case of a coordinate measuring machine, for example, the machine is operated by an operator with holding a part in a vicinity of the probing needle.

In the input part 11a, an operator designates a desired measuring procedure and a measurement item at the time of measuring an object, and gives an instruction to a reproduction instructing part 15 at the time of performing a maintenance examination.

A program storage part 12 stores programs for a operational procedure (measuring operation program) of the measuring machine 10a, which are previously made.

A measuring data calculating part 13 calculates the coordinates, shapes, dimensions, sizes, surface roundness, contour and the like of a measured part of the object from data measured by the measuring machine 10a in accordance with the type of the measuring machine which is applied.

The guidance storage part 14 stores plural pieces of operational guidance which is previously made. The operational guidance is composed of image and sound, or only image. In both cases, the image is digital image photographed by a video camera and digitized.

The reproduction instructing part 15 receives the designation of the operational guidance from the input part 11a, signal indicating a trouble of the measuring machine 10a (trouble signal) from the measuring machine 10a or instruction for performing a maintenance examination from the input part. Then, the reproduction instructing part 15 reads out the operational guidance designated by an operator, or the one corresponding to the trouble signal form the measuring machine 10a, or the one corresponding to the maintenance examination from the operation guidance storage part 14 and instructs the output part 16 to reproduce the guidance.

The output part 16 includes a display unit such as a CRT, etc. The output part 16 outputs the calculated value of the coordinates, shape, dimensions, sizes, and the like, and reproduces the operational guidance which was instructed by the reproduction instructing part 15.

Incidentally, the program storage part 12, the measuring data calculating part 13, the guidance storage part 14 and the reproduction instructing part 15 may be composed of one(1) computer just as in the conventional coordinate measuring system and the like. However, it is necessary to increase a storage capacity of the guidance storage part 14 or to raise a processing speed at the reproduction instruction part 15 on the basis of the contents of the image. Moreover, in the case that a sound is included in the operation guidance, the output part 16 should be provided with a speaker in addition to a display unit such as a CRT, etc.

Next, an explanation will hereunder be given of the operation of the operational guidance system for measuring system constructed in the above-mentioned manner.

At the time of measuring the object, at first, the operator instructs a program for a desired measuring procedure at the input part 11a. Then, a signal indicating the instruction is transmitted to a program storage part 12. The measuring procedure program is transmitted from the program storage part 12 to the reproduction instructing part 15. The reproduction instructing part 15 reads out the operation guidance corresponding to the measuring procedure program from the guidance storage part 14 and instructs the output part 16 to carry out the reproduction of the operational guidance. The instructed operation guidance is reproduced on the display unit of the output part 16.

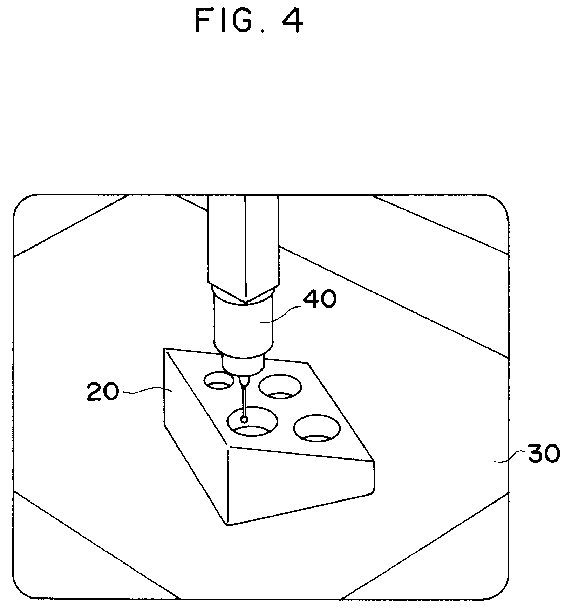

Fig. 4 is an example of a reproduced image. For example, 30 is a table of a coordinate measuring machine, and 40 is a probing needle. A jig for fixing an object 20 is not in the drawing. Incidentally, the image can be displayed on not only an entire screen but also a part of the divided screen.

The contents of the output operational guidance and a reproduction order are previously set for each measuring procedure program, as a result, the guidance can be reproduced in subdivided operations or they can be sequentially reproduced.

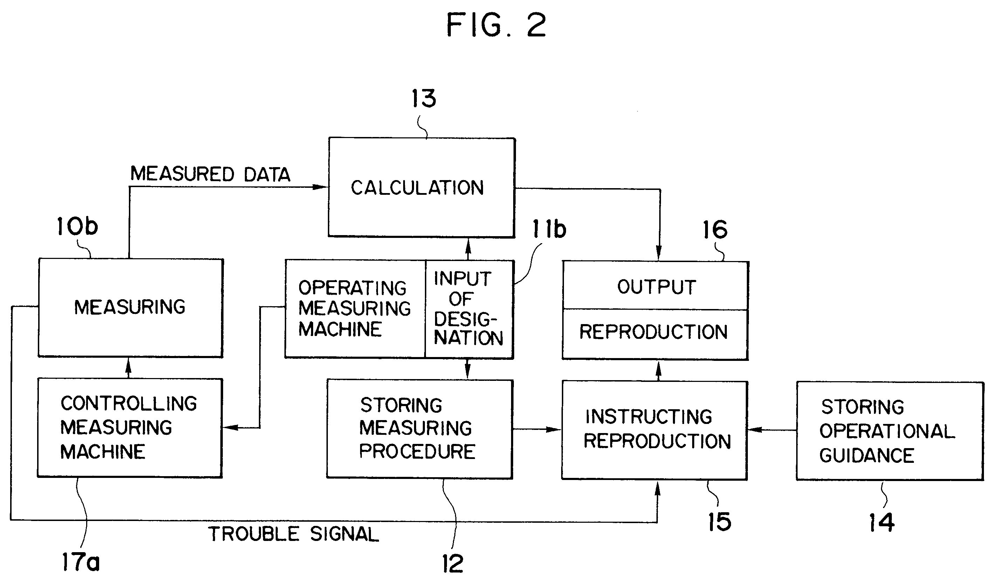

Fig. 2 is a block diagram of a second embodiment of the operational guidance system for a measuring machine according to the present invention. The same marks are put on the same or similar parts as those of the embodiment which is shown in Fig. 1, and an explanation of them is omitted here.

In the second embodiment, the measuring machine 10b is remotely controlled from a operating part for a measuring machine 10b such as a joystick. A input part 11b includes the operating part. The operator designates a measuring procedure etc. and controls the measuring machine 10b at the operating part of the input part 11b. Operational signal from the operating part is transmitted to a controller 17a for the measuring machine 10b. The controller 17a controls the measuring machine 10b in accordance with the operational signal from the operating part. In the other part of the system, same procedures are carried out as the first embodiment, so an explanation of them is omitted here.

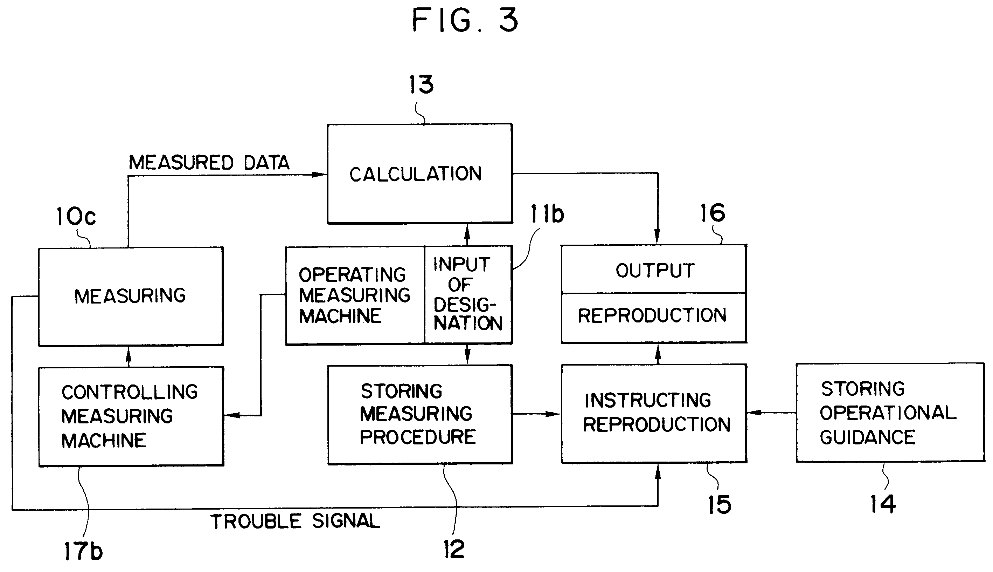

Fig. 3 is a block diagram of a third embodiment of the operational guidance system for a measuring machine according to the present invention. The same marks are put on the same or similar parts as those of the embodiment which is shown in Fig. 2, and an explanation of them is omitted here.

In the third embodiment, a measuring machine 10c is an automatic measuring machine, that is, the measuring machine 10c is controlled by computer and measures an object automatically without the operation of the operator (for example, CNC coordinate measuring machine). In order to carry out the measurement automatically, programs for automatically operating the measurement machine for the object of every kind, (for example, program for operating probing needle automatically for coordinate measuring machine) are previously included in the program for a operational procedure of the measuring machine 10c.

A controller 17b for the measuring machine 10c controls the measuring machine 10c in accordance with the program for a operational procedure of the measuring machine 10c stored in a program storage part 12. In the other part of the system, same procedures are carried out as the second embodiment, so an explanation of them is omitted here.

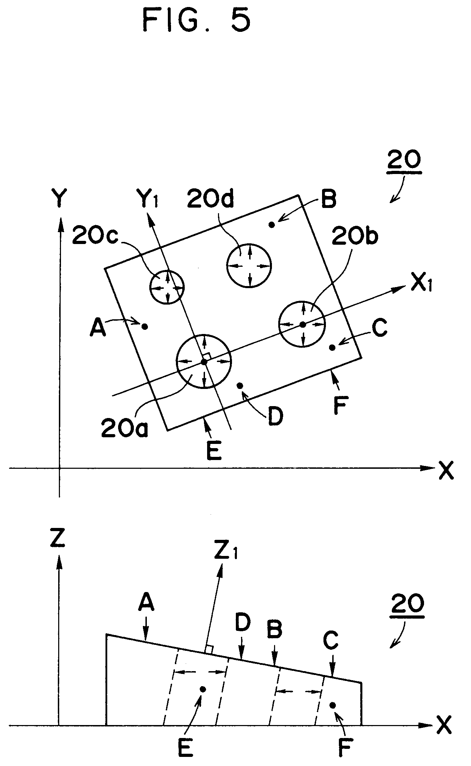

Next, one example will be shown for the case when the reference measurement is carried out with using the operational guidance system for the measuring machine according to the present invention with reference to Fig. 5.

In this case, the measuring machine is a coordinate measuring machine. A coordinate system is set on a top surface and two holes 20a and 20b of the object 20 for measuring holes 20c and 20d, etc.. An upper drawing in Fig. 5 is a plan view, and a lower drawing in Fig. 5 is an elevation. Axes X, Y and Z indicate a mechanical coordinate system. Arrows other than the ones indicating the coordinate system show measuring directions.

There is a method of using a mechanical coordinate system itself of the measuring machine as a coordinate system for measuring. However, an object is fixed in a voluntary status and the coordinate system is set on the object because it is difficult to position the object on the mechanical coordinate system.

First, the operator instructs the program for a desired measuring procedure at the input part 11a/11b, then, the reproduction instructing part 15 instructs the output part 16 to reproduce a guidance (an image and sound) indicating how to attach and position the object 20.

Next, the operator inputs information that the operator has attached the object 20 at the table of the measuring machines 10a/10b/10c at the input parts 11a/11b after an attachment, then, the reproduction instructing part 15 instructs the output part 16 to reproduce a guidance indicating a method of measuring a reference plane. The operator measures four points A, B, C and D on the top surface of the object 20 (it is sufficient if there are three points or more because the plane is measured in this case) in accordance with the guidance. When an origin is instructed, the top surface of the object is set as a reference plane by the measuring data calculating part 13, and a direction of an axis vertical to the reference plane (an axis Z1 in Fig. 5) is calculated. At the same time, the reproduction instructing part 15 instructs the output part 16 to reproduce a guidance indicating a method of measuring a hole 20a which is to be dealt next.

In accordance with the guidance, the operator measures a few points of the hole 20a, the measured data is reflected on the reference plane so that the center of the hole 20a is calculated. When the origin is instructed, the center of the hole 20a (a point on the reference plane) is calculated as the origin by the measuring data calculating part 13. At the same time, the reproduction instructing part 15 instructs the output part 16 to reproduce a guidance indicating a method of measuring a hole 20b which is to be dealt next.

When the hole 20b of the object 20 is measured in accordance with the guidance, the measured data is reflected on the reference plane so that the center of the hole 20b is calculated by the calculating part 13. When the reference axis is instructed, a straight line between the center of the hole 20b (a point on the reference plane) and the origin (the center of the hole 20a) is calculated to be set as the second reference axis (an axis X1 in Fig. 5). At the same time, an axis on the reference plane, which passes through the origin and is at a right angle (90° ) to the second reference axis, is set as the third axis (an axis Y1 in Fig. 5).

As mentioned above, the origin and three axes are set as the measuring coordinate system, and the reference measurement is completed.

After the above-described operations, in the case of the first and second embodiments, guidance for a measuring procedure are sequentially reproduced at the output part 16. In the case of the third embodiment, the object is automatically measured in accordance with the program for a operational procedure of the measuring machine 10c (for example, program for operating probing needle automatically for coordinate measuring machine).

Furthermore, when trouble occurs during the reference setting and/or the measurement, a trouble signal is transmitted to the reproduction instructing part 15, so the reproduction instructing part 15 reads out an operational guidance for dealing with the trouble from the guidance storage part 14, and instructs the output part 16 to reproduce the guidance. The instructed operational guidance is reproduced at the output part 16. The image of the operation guidance indicates switches, etc. of the input part to be operated, and the operator carries out the operation by looking at the image.

When the operator instructs an item for a maintenance/examination at the input parts 11a and 11b, the signal indicating the instructed item is transmitted to the reproduction instructing part 15. Then, the reproduction instructing part 15 reads out an operation guidance for maintenance/examination from the guidance storage part 14 and instructs the output part 16 to reproduce the guidance. The instructed operation guidance is reproduced at the output part 16. The image of the operation guidance (image and sound) indicates how the examination is to be performed for the applied measuring machine and the sound teaches the operator how to operate. The operator carries out the operation by looking at the image or listening to the sound.

Incidentally, it is possible to apply the image not only a photographed actual object but also a computer image. The photographed actual object is usually more understandable than the computer image. Moreover, it is possible to apply the image not only a static image but also animated image. Whether the image should be static or animated is determined by taking into consideration the storage capacity of the operation guidance storage part 14 and the processing speed at the regeneration instructing part 15, and the like.

As has been described, according to the operational guidance system for measuring machine of the present invention, each operation method is photographed and digitized to be memorized. When the operator instructs the measuring procedure program from the input part at the time of measuring, the image and sound explaining the operation are reproduced in accordance with the order set by the measuring procedure program. When the trouble occurs during the operation, the image and sound indicating a method of dealing with the trouble are reproduced. Furthermore, when the operator instructs the item for the maintenance/examination from the input part, the image and sound indicating the operation are reproduced.

Accordingly, it is not necessary for the operator to refer to the manual book in order to know the method of reference measuring, the method of operations, the method of dealing with troubles and the method of maintenance/ examination. Therefore, it is easy for inexperienced operators to understand and carry out the operations of the measuring machine.

Moreover, the operational guidance system for measuring machine of the present invention can be used for the measuring machine such as 3-D coordinate measuring machine, surface roughness measuring machine, contour measuring machine, roundness measuring machine, layout machine, profile projector, non-contact 2-D measuring machine, measuring machine for a gear, and the like, by preparing a program for measuring procedure of each of the above-mentioned measuring machines.

It should be understood, however, that there is no intention to limit the invention to the specific forms disclosed, but on the contrary, the invention is to cover all modifications, alternate constructions and equivalents falling within the spirit and scope of the invention.

## Claims

1. An operational guidance system for a measuring machine comprising:
input means (11a, 11b);
display means (16);
first storage means (12) for storing a plurality of programs for a measuring procedure of the measuring machine (10a, 10b, 10c), the programs being made previously, an operator selecting a desired program among the plurality of programs in accordance with the measuring machine (10a, 10b, 10c) at the input part;
second storage means (14) for storing plural pieces of operational guidance, the operational guidance being made previously;
calculating means (13) for calculating a measuring value from data measured by the measuring machine (10a), the measuring value being transmitted to the display means so as to be displayed; and
instructing means (15) for reading out the operational guidance from the second storage means in accordance with the program selected by the operator,an instruction by the operator from the input means, or a signal indicating a trouble from the measuring machine (10a, 10b, 10c), the operational guidance being transmitted to the display means so as to be displayed.

2. The operational guidance system for a measuring machine according to claim 1 further comprising;
operating means for remotely operating the measuring machine (10b), the operating means being included in the input means (11b); and
control means (17a) for controlling the measuring machine (10b) in accordance with an instruction from the operating means.

3. The operational guidance system for a measuring machine according to claim 1 or 2 further comprising control means (17b) for controlling the measuring machine (10c), wherein a program for automatically operating the measurement machine is included in the programs for measuring procedure of the measuring machine (10c) and the control means (17b) controls the measuring machine in accordance with the program for automatically operating.

4. The operational guidance system for a measuring machine according to any preceding claim, wherein said operational guidance is composed of digital image and sound.

5. The operational guidance system for a measuring machine (10a, 10b, 10c) according to any preceding claim, wherein the measuring machine is one of a 3-D coordinate measuring machine, a surface roughness measuring machine, a contour measuring machine, a roundness measuring machine, a layout machine, a profile projector, a non-contact 2-D measuring machine and a measuring machine for a gear.
